# EUROPÄISCHE PATENTSCHRIFT

(11) **EP 3 976 317 B1**
(45) Veröffentlichungstag und Bekanntmachung des Hinweises auf die Patenterteilung: **22.11.2023**
(21) Anmeldenummer: 20732766.9
(22) Anmeldetag: 29.05.2020
(51) Int. Cl.: B08B 9/057, B24C 3/32, F28G 1/12, B24C 7/00, B24C 9/00

(54) **VORRICHTUNG UND VERFAHREN ZUR REINIGUNG DER OBERFLÄCHEN VON ROHRINNENSEITEN**
DEVICE AND METHOD FOR CLEANING THE SURFACES OF THE INSIDES OF PIPES
DISPOSITIF ET PROCÉDÉ POUR NETTOYER LES SURFACES DE PAROIS INTERNES DE TUBES

(30) Priorität: 27.06.2019 DE 102019209347
(43) Veröffentlichungstag der Anmeldung: 06.04.2022
(73) Patentinhaber: Siemens Aktiengesellschaft, 80333 München (DE)
(72) Erfinder: BÖHLER, Sven, 91052 Erlangen (DE); EDER, Florian, 91054 Erlangen (DE); UTZMANN, Fabian, 91352 Hallerndorf (DE)
(74) Vertreter: Siemens Patent Attorneys
(86) Internationale Anmeldenummer: PCT/EP2020/065056
(87) Internationale Veröffentlichungsnummer: WO 2020/259959

(56) Entgegenhaltungen:
- EP-A1- 2 825 836
- CH-A5- 696 875
- DE-A1- 10 358 253
- JP-A- 2018 089 748
- US-A- 3 914 815
- US-A- 5 442 826
- US-A1- 2004 121 703
- US-A1- 2009 270 016
- US-A1- 2012 024 320

## Beschreibung

Die Erfindung betrifft eine Vorrichtung und ein Verfahren zur Reinigung von Oberflächen von Rohrinnenseiten, Oberflächen aus beispielsweise Metall, Kunststoff, Glas, Keramik, Stein, Beton und/oder Holz, gemäß dem Oberbegriff der Ansprüche 1 und 8. Insbesondere betrifft die Vorrichtung die Reinigung von Oberflächen wasserdurchflossener Rohre wie beispielsweise Rohre von Wärmetauschern.

Bekannt sind Reinigungsmethoden wie Hochdruckreinigung oder Kugelumlaufspülung. Die Kugelumlaufspülung funktioniert dadurch, dass dem Fluid, das durch das Rohr fließt Kugeln zugegeben werden, die mit dem Fluid transportiert werden. Durch die Bewegung der Kugeln wird eine Reinigungswirkung erzeugt, insbesondere durch eine Abrasionswirkung der Kugeln. Diese Art der Reinigung der Oberflächen der Rohrinnenseiten ist zum einen inhomogen, weil nicht überall Kugeln auftreffen und zum anderen aufwendig, nicht nur wegen des Materialverschleißes, sondern auch weil die sauberen frischen Kugeln ins Fluid ein zu führen sind und die verbrauchten aus dem Fluid wieder zu entfernen sind.

Aus der DE 10 2013 222909 ist ein Verfahren zur Beschichtung von Rohrinnenseiten bekannt, bei dem eine miniaturisierte Plasmadüse durch ein Rohr auf einem Schlitten gezogen wird. Eine Plasmabeschichtung kann dabei auch zur Reinigung genutzt werden. Für den Beschichtungsprozess sind allerdings besonders reine Oberflächen notwendig. Zur Reinigung des Innenrohrs, respektive dessen Oberfläche, bedarf es eines effizienten Reinigungsverfahrens, das die Oberflächen homogen säubert. Aus JP 2018 089748 A ist es bekannt, ein Verfahren und eine Vorrichtung zum Strahlen einer Innenfläche eines Rohres für verschiedene Zwecke, wie Reinigen, Polieren und Schleifen. JP 2018 089748 A entspricht dem nächstliegenden Stand der Technik des Gegenstands der Ansprüche 1 und 8.

In industriellen großtechnischen Anlagen der Kraftwerks- und Energietechnik werden Rohre und/oder Rohrbündel häufig zur Funktion als Wärmeübertrager verwendet. Für diesen Gebrauch werden die einzelnen Rohre zumeist von Kühlwasser, das teilweise aus natürlichen Seen stammt oder einfach Flusswasser ist, durchströmt. Dabei entstehen unerwünschte Ablagerungen und Verunreinigungen, die regelmäßig zu entfernen sind.

Für ebene und frei zugängliche Oberflächen ist das so genannte Vakuum-Saugstrahlen bekannt, bei dem durch einen Industriestaubsauger in einem abgeschlossenen Strahlkopf ein Unterdruck erzeugt wird, durch den Strahlmittel auf die Oberfläche beschleunigt und sofort nach dem Strahl-Prozess wieder abgesaugt wird. Durch die Strahllanze kann dabei der Verlauf des Strahlprozesses direkt gesteuert werden. Dies ist bei Oberflächen von Rohrinnenseiten jedoch nicht möglich.

Deshalb ist es Aufgabe der vorliegenden Erfindung eine Vorrichtung und ein Verfahren zum Reinigen der Oberflächen von Rohrinnenseiten bereit zu stellen, die eine homogene Reinigung der Oberfläche von Rohrinnenseiten ermöglicht.

Diese Aufgabe wird durch eine Strahlvorrichtung zur Reinigung der Oberflächen von Rohrinnenseiten mit den Merkmalen des Patentanspruchs 1 und durch ein Verfahren zur Reinigung der Oberflächen von Rohrinnenseiten mit den Merkmalen des Patentanspruchs 8 gelöst. Vorteilhafte Ausgestaltungen mit zweckmäßigen Weiterbildungen der Erfindung sind in den abhängigen Patentansprüchen angegeben.

Allgemeine Erkenntnis der Erfindung ist es, dass durch einen abgedichteten Auslass für Strahlmittel innerhalb des zu reinigenden Rohres die Erzeugung einer Drallströmung des Strahlmittels möglich ist, die ihrerseits eine Reinigung der Innenseite des Rohres durch Einbringen und Absaugen des Strahlmittels ermöglicht.

Nach einer vorteilhaften Ausführungsform der Erfindung wird der Drall in der Strömung des Strahlmittels durch seitliches Einleiten, einen kegelförmigen Einlass, beispielsweise einer Strahllanze und/oder durch schneckenförmige Strömungsführung innerhalb des Rohres und/oder einer Strahllanze erzeugt. Durch den Drall wird die Strömung des Strahlmittels innerhalb des zu reinigenden Rohres zur Rotation entlang der Rohrinnenwand gezwungen.

Zur Erzeugung einer rotierenden Strömung innerhalb einer rohrartigen Geometrie können die oben genannten Maßnahmen einzeln oder in beliebiger Kombination eingesetzt werden. Gemäß einer vorteilhaften Ausbildung der Erfindung wird ein Strahlmittel und/oder Reinigungsgranulat aus einem Vorratsbehälter in ein strömendes Trägerfluid, beispielsweise einen Tragluftstrom, eingebracht und mittels Unterdrucks gegen die Oberfläche der Rohrinnenseite geschleudert und von dort in den Strom des Trägerfluids zurückgeworfen.

Für die Geschwindigkeit und Beschleunigung des Strahlmittels sorgt der Unterdruck, die Art des Einlasses und/oder das strömende Fluid, in das das Strahlmittel eingebracht wird.

Das Strahlmittel ist in der Regel handelsüblich und umfasst beispielsweise eine Reihe Partikel aus Metalloxiden, Keramiken, Metallen und/oder Sand in verschiedener Form und Größe. Strahlmittel können je nach Anwendung verschiedene Zusätze haben, die spezifisch auf die zu reinigende Oberfläche und/oder den Schmutz ausgewählt werden.

Als Strahlmittel können alle Arten von Reinigungsgranulaten bis hin zu porösen Keramikkugeln eingesetzt werden. Beispielsweise handelt es sich um Strahlmittel-Partikel mit Beschichtung, beispielsweise mit absorbierender und/oder adsorbierender Oberfläche. Die Strahlmittel-Partikel können auch sonst unterschiedlichste Additive und/oder Beschichtungen aufweisen.

Als Trägerfluid für das Strahlmittel können Luft, Stickstoff, Edelgase, Wasser, Alkohol, organische Lösungsmittel etc. eingesetzt werden.

Als Einlass dienen herkömmliche Strahllanzen, mit denen Strahlmittel auf Oberflächen verteilbar ist, und/oder ein - beispielsweise kegelförmiger - Einlass und/oder ein sonstiges Ventil. Insbesondere zur Erzeugung des Dralls hat sich dabei beispielsweise eine schneckenförmige Strömungsführung innerhalb der Zuleitung des Strahlmittels als günstig erwiesen.

Zur Abdichtung hat ein Einlass und/oder Auslass des Strahlmittels beispielsweise einen Gummiring.

Der Einlass und der Auslass des Strahlmittels sind jeweils gegen die Rohrinnenseiten abgedichtet, damit der Druck, der innerhalb des zu reinigenden Rohres oder Rohrabschnittes durch den Absaugschlauch erzeugt wird, auch im zu reinigenden Rohr oder Rohrabschnitt gehalten wird.

In der Zuleitung ist eine Dosiereinrichtung vorgesehen, die - wiederum beispielswiese über Datenverarbeitung von durch Sensoren erfassten Daten, die den Grad der Verschmutzung innerhalb des Rohres erkennen, regel- und steuerbar ist, also in Abhängigkeit von den durch die Sensoren erfassten Daten eine Menge an Strahlmittel und/oder die Zusammensetzung des Strahlmittels ausrechnet, die in die Zuleitung eingespeist wird.

Des Weiteren kann vorgesehen sein, dass die erfassten Daten vom Grad der Verschmutzung innerhalb des Rohres über eine Rechnereinheit die Geschwindigkeit und den Unterdruck innerhalb des Rohres regeln und steuern.

Durch eine elektrisch leitende Ausführung des Absaugschlauchs kann für bestimmte Strahlmittel, die sich durch Reibung, insbesondere Wandreibung an der Oberfläche der Rohrinnenseite, elektrisch aufladen, diese elektrische Aufladung wieder neutralisiert werden. Spannungsüberschläge werden hierdurch vermieden. Alle Teile, wie z.B. das Rohr selbst, haben vorzugsweise eine elektrische Verbindung zu Masse, also eine Erdung. Der Absaugschlauch selbst kann auch aus elektrisch leitendem Material sein. Beispielsweise kann es sich um einen gefüllten Kunststoff mit elektrisch leitfähigen Partikeln handeln.

Als Absaugschlauch wird beispielsweise ein Druckluftschlauch, also ein handelsüblicher Schlauch, der resistent gegen Öl, Chemikalien, UV-Strahlung und eben Druck-stabil ist. Beispielsweise ist dieser gleichzeitig stabil gegen organische Lösungsmittel, gegen Strahlmittel und/oder sonstige Additive oder eben auch die Verschmutzungen, die mit dem Strahlmittel aufzunehmen sind.

Im Folgenden wird die Erfindung noch anhand von Figuren, die vorteilhafte Ausführungsformen der Erfindung zeigen, näher erläutert:
Figur 1 zeigt die Vorrichtung zum Reinigen für kurze Rohre und mit stationärem Strahlmitteleinlass,
Figur 2 zeigt die Vorrichtung zum Reinigen für lange Rohre mit mobilem Strahlmitteleinlass.

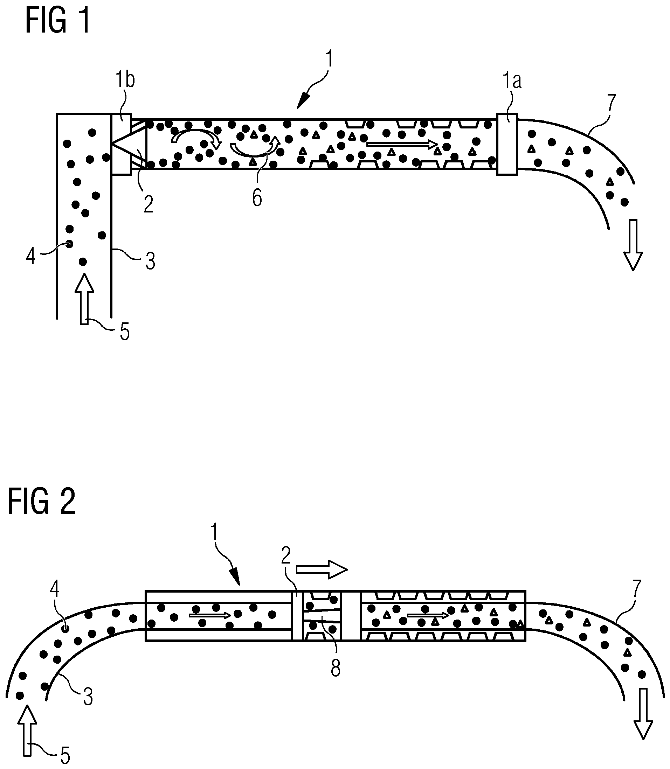

Figur 1 zeigt ein Rohr 1, mit zwei Rohrenden, 1a und 1b.Am Rohrende 1b erkennt man den Einlass des Strahlmittels 2, der kegelförmig ist. Als Einlass dient beispielsweise eine Strahllanze, wie sie handelsüblich erhältlich ist. Durch die Zuleitung 3 der beispielsweise Strahllanze gelangt das Strahlmittel 4 entlang der Strömungsrichtung 5 zum Rohrende 1b und damit zum Einlass 2. Das Rohrende 1b ist abgedichtet, damit innerhalb des Rohres 1 durch den Druckschlauch 7, der am Rohrende 1a befestigt ist, ein Unterdruck erzeugt werden kann. Durch den Unterdruck und den kegelförmigen Einlass 2 erhält das eingelassene Strahlmittel 4 einen Drall 6, der das Strahlmittel an die Oberflächen der Rohrinnenseiten schleudert. Durch den Unterdruck, der über den Schlauch 7 mittels eines Unterdruck-Erzeugungs-Moduls, also beispielsweise einer Pumpe, insbesondere einer Unterdruck-Pumpe, erzeugbar ist, wird das Strahlmittel 4 von der Oberfläche der Rohrinnenseite wieder losgelöst und abgesaugt. Das abgesaugte Strahlmittel 4 kann gereinigt und wiederverwendet werden. Das Unterdruck-Erzeugungs-Modul ist an den Absaugschlauch angeschlossen und/oder diesem vorgelagert.

Figur 2 zeigt eine vergleichbare, jedoch mobile Vorrichtung zur Verwendung in langen Rohren. Beispielsweise wird die Vorrichtung über den Vakuumschlauch 7 durch das Rohr gezogen, indem eine tragfähige Verbindung zwischen Einlass und Auslass vorgesehen ist. Diese Verbindung kann beispielsweise in Form des Leitkegels 8, der Teil des Einlasses 2 ist, realisiert sein.

Diesmal sind der Einlass 2 und der Leitkegel 8 nicht fix an einem Rohrende montiert, sondern bewegen sich innerhalb des Rohres 1 in Strömungsrichtung 5, respektive in Absaugrichtung. Bevorzugt bewegt sich der Einlass 2 in konstanter Entfernung zum Auslass durch das Rohrinnere. Der Leitkegel 8 des kegelförmigen Einlasses ist auch nicht lediglich Teil des Einlasses, wie in Figur 1, sondern erstreckt sich weiter durch das Rohrinnere, so dass die Partikel 4 des Strahlmittels dadurch an die Rohrinnenseiten geschleudert werden und auch durch die Enge des durch den Leitkegel 8 an den Seiten des Rohrinneren erzeugten Kanals eine größere Beschleunigung erfahren. Der über eine Abdichtung mit dem Rohr verbundene Absaugschlauch 7 ist gemäß dieser Ausführungsform ebenfalls mobil und innerhalb des Rohres, beispielsweise in konstantem Abstand zu dem Einlass 2, beweglich. Zu erkennen ist in Figur 2 auch wieder das Strahlmittel 4, die Zuleitung 3 und die Strömungsrichtung 5. Der Leitkegel 8 leitet die Strömung mechanisch an die Rohrinnenseiten.

Durch den Leitkegel wird gemäß des Ausführungsbeispiels aus Figur 2 das Strahlmittel an die Oberflächen der Rohrinnenseiten geleitet. Dies wird vorliegend als die Erzeugung eines "Dralls" bezeichnet. Die Ausbildung einer Drallströmung im Rohr ist vorteilhaft für die Effektivität des Reinigungsverfahrens, insbesondere auch für die Homogenität. Die "Drallstärke", also die Geschwindigkeit, mit der Partikel des Strahlmittels auf die Oberfläche der Rohrinnenseite auftreffen entspricht der Wandreibung des partikulären Strahlmittels und kann dem Grad der Verunreinigung angepasst werden.

Durch einen bestimmten Abstand zwischen Ein- und Auslass kann bei einem vorgegebenen Druck eine zumindest vom Rohrquerschnitt, dem Strahlmittel und dem Trägerstrom abhängige Geschwindigkeit der Reinigung eingestellt werden.

Andererseits kann durch Auswahl des Einlasses, beispielsweise mehrere Ventil-Köpfe die Strömungsgeschwindigkeit und Strömungsrichtung beeinflusst werden.

Mit der vorliegenden Erfindung wird erstmals ein hocheffizientes und automatisierbares Reinigungskonzept von Rohren zur Beseitigung von unerwünschten Ablagerungen vorgestellt, welches hauptsächlich mechanisch reinigt und gegebenenfalls auch ganz auf den Einsatz von Spüllösungen, Suspensionen und/oder Reinigungschemikalien verzichtet.

Die hier vorgestellte technische Lösung zeichnet sich vor allem dadurch aus, dass die Methode des Saugstrahlens erstmals für rohrartige Geometrien zugänglich wird. Die Technik ist für alle Arten rohrartiger Geometrien, also auch Zylinder, Hülsen, Spritzen und Rohrbündel einsetzbar. Vorliegend wird der Begriff Rohr dahingehend verstanden, dass ein Zylinder an dessen Boden eine entsprechende Absaugvorrichtung montierbar ist, auch unter den Begriff "Rohr" fällt.

Insbesondere hat die Technik folgende Vorteile:
- Hohe Effektivität der Reinigungswirkung durch Ausbildung einer abrasiv-wirkenden Drallströmung des Strahlmittels durch das Rohr
- Schneller Reinigungsprozess und dadurch geringe Ausfallzeiten des Rohrs
- Für alle Arten von Verschmutzungen geeignet, da mechanische und chemische Reinigung einsetzbar sind
- Variabel einstellbar durch Strahlmittel, Geschwindigkeit, insbesondere auch Verweildauer des Strahlmittels an der Oberfläche der Rohrinnenseiten, und/oder Drallströmung
- Kostengünstiges Verfahren, wenn das Strahlmittel recyclebar ist
- Keine Abwasseraufbereitung
- Gegebenenfalls ohne Zusatz von Chemikalien
- Clean in Place und/oder inline-fähiges Konzept, da mobile Vorrichtung
- Strahlmittelkreislauf durch Separation von Schmutz und Strahlmittel
- Automatisierbarkeit des Verfahrens

Das hier neu entwickelte Verfahren und die neu entwickelte Vorrichtung ermöglichen eine homogene Reinigung der Oberflächen von Rohrinnenseiten, weil sie als Reaktionszone und Barriere der Partikel des Strahlmittels das zu reinigende Rohr selbst nutzen. An eine Rohröffnung wird beispielsweise einfach eine Strahllanze als Einlass platziert, welche das Strahlmittel in das Rohr befördert und an die verschmutzten Oberflächen der Rohrinnenseiten schleudert. Auf der anderen Seite des Rohres wird das Strahlmittels mittels des Absaugschlauches aus dem Rohr wieder entfernt. Des verbrauchte Strahlmittel kann beispielsweise mittels eines Zyklons, also eines Fliehkraftabscheiders, wiederaufgearbeitet und vom Schmutz befreit werden.

## Patentansprüche

1. Vorrichtung zur Reinigung der Oberflächen von Rohrinnenseiten, einen Einlass (2) mit Abdichtung zur Beaufschlagung der Oberflächen der Rohrinnenseiten mit Strahlmittel (4) einerseits und einen abgedichteten Auslass mit Absaugschlauch und anliegendem Unterdruck andererseits umfassend, wobei die beiden Teile an entgegengesetzten Enden (1a, 1b) des zu reinigenden Rohres (1) oder Rohrabschnitts vorgesehen sind und entweder statisch an den Rohrenden verbleiben oder mobil durch das Rohr bewegt werden, und damit geeignet sind, die Oberflächen der Rohrinnenseiten mit Strahlmittel kurzzeitig zu beaufschlagen und durch den Unterdruck von der Oberfläche wieder zu entfernen, **dadurch gekennzeichnet, dass** eine Kommunikationsschnittstelle vorgesehen ist, die geeignet ist, Daten eines Sensors aus dem Rohrinneren zu empfangen und an eine Steuereinheit zur Steuerung einer Dosiereinheit in der Zuleitung (3) zur Dosierung des Strahlmittels weiterzugeben.

2. Vorrichtung nach Anspruch 1, wobei der Einlass eine Strahllanze ist.

3. Vorrichtung nach Anspruch 1, wobei der Einlass ein Ventil ist.

4. Vorrichtung nach einem der vorhergehenden Ansprüche, wobei der Einlass kegelförmig mit sich in das Rohrinnere aufweitender Form ist.

5. Vorrichtung nach einem der vorhergehenden Ansprüche, die einen Leitkegel umfasst.

6. Vorrichtung nach einem der vorhergehenden Ansprüche bei der als Unterdruck-Erzeugungs-Modul eine Pumpe dem Absaugschlauch vorgelagert oder an den Absaugschlauch angeschlossen, vorgesehen ist.

7. Vorrichtung nach Anspruch 6, bei der eine Kommunikationsschnittstelle vorgesehen ist, die geeignet ist, Daten eines Sensors aus dem Rohrinneren zu empfangen und an eine Steuereinheit zur Steuerung des Unterdruck-Erzeugungs-Moduls weiterzugeben.

8. Verfahren zur Reinigung der Oberflächen von Rohrinnenseiten folgende Verfahrensschritte umfassend:
- Bereitstellen eines Strahlmittels in einem Vorratsbehälter
- Einleiten des Strahlmittels in ein Rohr
- Beschleunigung des Strahlmittels auf die Oberflächen der Rohrinnenseiten in ein zu reinigendes Rohr durch einen Einlass und
- Ausleiten des Strahlmittels mittels Unterdrucks;
das Verfahren ist **dadurch gekennzeichnet, dass** es unter Verwendung einer Vorrichtung nach einem der Ansprüche 1 bis 7 ist.

9. Verfahren nach Anspruch 8, das den Verfahrensschritt des Einbringens von Strahlmittel in ein Trägerfluid vor dem Einlass in das zu reinigende Rohr umfasst.

10. Verfahren nach einem der Ansprüche 8 oder 9, das den Verfahrensschritt des Trennens von Strahlmittel und Trägerfluid nach dessen Ausleitung.

11. Verfahren nach einem der Ansprüche 8 bis 10, das den Verfahrensschritt des Erzeugens von Daten eines auf der Oberfläche der Rohrinnenseiten messenden Sensors und die Weiterleitung dieser Daten an ein datenverarbeitendes Gerät umfasst.

12. Verfahren nach Anspruch 11, das den Verfahrensschritt eines automatisierten Regelns und/oder Steuerns einer Dosiereinrichtung durch Kommunikation mit dem datenverarbeitenden Gerät, umfasst.

13. Verfahren nach Anspruch 11 oder 12, das den Verfahrensschritt eines automatisierten Regelns und/oder Steuerns einer Unterdruck-Pumpe durch Kommunikation mit dem datenverarbeitenden Gerät, umfasst.

## Claims

1. Device for cleaning the surfaces of insides of pipes, comprising, at one end, an inlet (2) with sealing for applying abrasives (4) to the surfaces of the insides of pipes and, at the other end, a sealed-off outlet with a suction hose and applied vacuum, wherein the two parts are provided at opposite ends (1a, 1b) of the pipe (1) or pipe portion to be cleaned and either remain static at the pipe ends or are moved in a mobile manner through the pipe, and therefore are suitable for briefly applying abrasives to the surfaces of the insides of pipes and for removing them from the surface again using the vacuum, **characterized in that** a communication interface is provided which is suitable for receiving data from a sensor from the interior of a pipe and passing it on to a control unit for controlling a metering unit in the feed line (3) for metering the abrasive.

2. Device according to Claim 1, wherein the inlet is a jet lance.

3. Device according to Claim 1, wherein the inlet is a valve.

4. Device according to one of the preceding claims, wherein the inlet is conical with a form that widens in the direction of the interior of the pipe.

5. Device according to one of the preceding claims, which comprises a guide cone.

6. Device according to one of the preceding claims, in which the vacuum-generating module provided is a pump positioned upstream of the suction hose or connected to the suction hose.

7. Device according to Claim 6, in which a communication interface is provided, which is suitable for receiving data from a sensor from the interior of a pipe and passing it on to a control unit for controlling the vacuum-generating module.

8. Method for cleaning the surfaces of insides of pipes, comprising the following method steps:
- providing an abrasive in a storage container,
- introducing the abrasive into a pipe,
- accelerating the abrasive through an inlet onto the surfaces of the insides of the pipe in a pipe to be cleaned and
- discharging the abrasive by means of vacuum;
the method being **characterized in that** it is performed using a device according to one of Claims 1 to 7.

9. Method according to Claim 8, which comprises the method step of introducing abrasives into a carrier fluid before being admitted into the pipe to be cleaned.

10. Method according to one of Claims 8 and 9, which comprises the method step of separating abrasives and carrier fluid after they have been discharged.

11. Method according to one of Claims 8 to 10, which comprises the method step of data being generating by a sensor performing measurement on the surface of the insides of pipes and passing on this data to a data-processing device.

12. Method according to Claim 11, which comprises the method step of automated closed-loop control and/or open-loop control of a metering device by communication with the data-processing device.

13. Method according to Claim 11 or 12, which comprises the method step of automated closed-loop control and/or open-loop control of a vacuum pump by communication with the data-processing device.

## Revendications

1. Dispositif pour le nettoyage des surfaces de faces internes d'un tube, comprenant une entrée (2) avec étanchéité pour l'alimentation des surfaces des faces internes du tube avec des agents de sablage (4) d'une part et une sortie étanchéifiée avec tuyau d'aspiration et dépression d'autre part, dans lequel les deux parties sont disposées à des extrémités opposées (1a, 1b) du tube (1) ou de la portion de tube à nettoyer et soit restent statiques au niveau des extrémités du tube soit sont déplacées à travers le tube et donc sont conçues pour alimenter les surfaces des faces internes du tube avec un agent de sablage pendant une courte période et pour l'éliminer à nouveau de la surface grâce à la dépression, **caractérisé en ce qu'**une interface de communication est prévue, qui est conçue pour recevoir des données d'un capteur provenant de l'intérieur du tube et pour les transmettre à une unité de commande pour le contrôle d'une unité de dosage dans la conduite d'alimentation (3) pour le dosage de l'agent de sablage.

2. Dispositif selon la revendication 1, dans lequel l'entrée est une lance de sablage.

3. Dispositif selon la revendication 1, dans lequel l'entrée est une soupape.

4. Dispositif selon l'une des revendications précédentes, dans lequel l'entrée est conique avec une forme s'élargissant dans l'intérieur du tube.

5. Dispositif selon l'une des revendications précédentes, qui comprend un cône directeur.

6. Dispositif selon l'une des revendications précédentes, dans lequel, en tant que module de production de dépression, une pompe, disposée en amont du tuyau d'aspiration ou raccordée au tuyau d'aspiration, est prévue.

7. Dispositif selon la revendication 6, dans lequel une interface de communication est prévue, qui est conçue pour recevoir des données d'un capteur provenant de l'intérieur du tube et pour les transmettre à une unité de commande pour le contrôle du module de production de dépression.

8. Procédé de nettoyage des surfaces de faces internes d'un tube, comprenant les étapes suivantes :
- mise à disposition d'un agent de sablage dans un réservoir
- introduction de l'agent de sablage dans un tube
- accélération de l'agent de sablage sur les surfaces des faces internes du tube dans un tube à nettoyer à travers une entrée et
- évacuation de l'agent de sablage au moyen d'une dépression ;
le procédé est **caractérisé en ce qu'**il exécuté à l'aide d'un dispositif selon l'une des revendications 1 à 7.

9. Procédé selon la revendication 8, qui comprend l'étape de procédé de l'introduction d'un agent de sablage dans un fluide porteur avant l'entrée dans le tube à nettoyer.

10. Procédé selon l'une des revendications 8 ou 9, qui comprend l'étape de procédé de la séparation de l'agent de sablage et du fluide porteur après son évacuation.

11. Procédé selon l'une des revendications 8 à 10, qui comprend l'étape de procédé de génération de données d'un capteur de mesure sur la surface des faces internes du tube et la transmission de ces données à un appareil de traitement de données.

12. Procédé selon la revendication 11, qui comprend l'étape de procédé de la régulation et/ou du contrôle automatisé d'un dispositif de dosage grâce à une communication avec l'appareil de traitement de données.

13. Procédé selon la revendication 11 ou 12, qui comprend l'étape de procédé de la régulation et/ou du contrôle automatisé d'une pompe à dépression grâce à une communication avec l'appareil de traitement de données.
